# EUROPEAN PATENT APPLICATION

(11) **EP 4 614 592 A1**
(43) Date of publication of application: **10.09.2025**
(21) Application number: 23884752.9
(22) Date of filing: 27.10.2023
(51) Int. Cl.: H01M 4/36, H01M 4/131

(54) **POSITIVE ELECTRODE MATERIAL AND PREPARATION METHOD THEREFOR, POSITIVE ELECTRODE AND BATTERY**

(30) Priority: 01.11.2022 CN 202211356094
(71) Applicant: Shenzhen Innovazone Technology Co., Ltd., Shenzhen, Guangdong 518055 (CN)
(72) Inventor: ZHANG, Li, Shenzhen, Guangdong 518055 (CN); CHEN, Xinyi, Shenzhen, Guangdong 518055 (CN); PEI, Xianyinan, Shenzhen, Guangdong 518055 (CN); WAN, Yuanxin, Shenzhen, Guangdong 518055 (CN); KONG, Lingyong, Shenzhen, Guangdong 518055 (CN)
(74) Representative: Bals & Vogel Patentanwälte PartGmbB
(86) International application number: PCT/CN2023/127134
(87) International publication number: WO 2024/093820

(57) **Abstract**

A cathode material, a preparation method thereof, a cathode, and a battery. The cathode material includes: a lithium-rich material core, and a conductive layer coated on a surface of the lithium-rich material core; at least one of the core and the conductive layer is doped with at least one of an element P and an element B. The cathode material has a conductive layer doped with at least one of the element P and the element B, which can stabilize the material structure and therefore improve the rate performance and cycle stability of the material.

## Description

The present application claims the priority of the Chinese patent application filed with the China Patent Office on November 1, 2022, with an application number 202211356094.7, the entire contents of which are incorporated by reference in the present application.

### TECHNICAL FIELD

The present application relates to the technical field of lithium-ion batteries, more particularly to a cathode material, a preparation method thereof, a cathode, and a battery.

### BACKGROUND

Cathode material of lithium-ion batteries is one of the key raw materials of lithium-ion batteries, and the quality of the performance of the cathode material directly affects the performance of lithium-ion batteries. The current cathode materials on the market mainly include: lithium cobalt oxide, spinel lithium manganese oxide, nickel cobalt lithium manganese oxide, nickel cobalt oxide, lithium ferrous phosphate and other materials. Among them, lithium cobalt oxide materials are the most mature in application, but the resource reserves are limited and the cost is high; spinel lithium manganese oxide materials are cheap and safe, but have low specific capacity and poor cycle performance; compared with lithium cobalt oxide, nickel cobalt manganese oxide has low cost, high specific capacity, good safety and environmental friendliness, but low platform voltage and lower compaction density; although lithium iron phosphate has good electrochemical performance, it is expensive and has poor safety.

At present, lithium-rich manganese-based cathode materials have become a research hotspot because of their advantages such as high discharge specific capacity, high discharge voltage, high energy density, low cost, high safety, and long cycle life. Moreover, lithium-rich manganese-based cathode materials not only have the same lithium-supplementing effect as other lithium-supplementing materials, but can also be used as cathode materials themselves. Lithium-supplementing materials can make up for the irreversible capacity loss caused by the formation of SEI film during the initial charging process of lithium-ion batteries. Therefore, there is great market potential in the future. However, during the cycle, the structural transformation of the material (from layered structure to spinel structure) causes the voltage to drop; the Jahn-Teller effect of Mn³⁺ in the spinel structure will also gradually destroy the spinel structure and cause the capacity to decay; in addition, Mn³⁺ reacts with a trace amount of HF in the electrolyte to cause Mn to dissolve into the electrolyte, resulting in poor cycle stability.

### SUMMARY

In view of this, the technical problem to be solved by the present application is to provide a cathode material, which has a conductive layer doped with at least one of the element P and the element B, with a stable material structure, high rate performance, and cycle stability.

The present application provides a cathode material, which comprises: a lithium-rich material core, and a conductive layer coated on a surface of the lithium-rich material core. At least one of the lithium-rich material core and the conductive layer is doped with at least one of an element P and an element B.

The cathode material of the present application comprises a lithium-rich material core. In certain embodiments of the present application, a lithium-rich material is a lithium-rich manganese-based material having a molecular formula of Li₁₊ₓR_{y}Mn_{z}Oₛ, in which, R is at least one selected from metal elements, 0<<x<1, 0≤y < 1, 0<z≤1, and 1≤s≤4. In certain embodiments of the present application, R is at least one selected from transition metal elements, such as Ni, Fe, Co, V, Cu, Mo, Al, Ti, Mg, Cr, Zr, Sn, and Zn.

If a D50 of the lithium-rich material core of the present application is too small, the particles will easily agglomerate, thereby increasing the electronic conductivity and the internal resistance of the prepared lithium-ion battery, and deteriorating the performance thereof. If the D50 of the lithium-rich material core is too large, the diffusion pathway of Li⁺ will become longer, making the Li⁺ diffusion kinetics relatively slow, greatly reducing the reversible capacity of the material. In certain embodiments of the present application, a D50 of the lithium-rich material core is 0.3 µm to 50 µm. Within this range, the particles are not easy to agglomerate and the diffusion pathway is moderate, which is beneficial for the material to play its charge and discharge performance.

The cathode material of the present application includes a conductive layer coated on a surface of the lithium-rich material core. The conductive layer of the present application is a conductive encapsulation layer coated on the surface of the lithium-rich material core, the conductive layer is uniformly coated on the outer surface of the core and includes at least one of a carbon layer, a conductive polymer layer, or a conductive oxide layer. In some embodiments of the present application, the carbon layer includes at least one of amorphous carbon, carbon nanotubes, graphite, carbon black, graphene, etc. The conductive oxide may include at least one of In₂O₃, ZnO, and SnO₂. The conductive polymer includes at least one of an organic polymer with a structure of [C₆H₇O₆Na]ₙ, an organic polymer with a structure of [C₆H₇O₂(OH)₂OCH₂COONa]ₙ, an organic polymer with a structure of [C₃H₄O₂]ₙ, an organic polymer with a structure of [C₃H₃O₂Mₐ]ₙ, an organic polymer with a structure of [C₃H₃N]ₙ, an organic polymer containing a -[CH₂-CF₂]ₙ- structure, etc.

If a mass fraction of the conductive layer in the cathode material of the present application is too low, the conductive layer coating will be discontinuous, resulting in side reactions between the material and the electrolyte. If the mass fraction of the conductive layer in the cathode material is too high, it will hinder the diffusion of lithium during the deintercalation process and increase the resistance of the electrode/electrolyte interface, hindering the movement of electrons, thereby causing capacity decay. While within a preferred range, a uniform and thin coating layer will be formed, and the normal transmission of lithium ions and electrons can be maintained, thereby improving the performance of the material. In certain embodiments of the present application, a mass fraction of the conductive layer in the cathode material is preferably 0.05 wt% to 10 wt%; and a thickness of the conductive layer is preferably 1 nm to 50 nm.

At least one of the core and the conductive layer of the present application is doped with at least one of an element P and an element B. The element P can inhibit the structural transformation of the cathode material from a layered structure to a spinel structure, and the doping of the element B can also effectively inhibit the structural transformation of the cathode material, and can also inhibit the activity of the side reaction on the surface of the cathode material, thereby improving the cycle performance of the cathode material. In certain embodiments of the present application, only the conductive layer may be doped with at least one of the element P and the element B, or only the core may be doped with at least one of the element P and the element B, or both the core and the conductive layer may be doped with at least one of the element P and the element B.

In certain embodiments of the present application, the conductive layer is a carbon layer, and only the carbon layer is doped with the element P. The carbon layer of the present application improves the conductivity of the cathode material, in addition, the element P inhibits the structural transformation of the cathode material from the layered structure to the spinel structure.

In certain embodiments of the present application, the conductive layer is a carbon layer, and only the carbon layer is doped with the element B. The carbon layer of the present application improves the conductivity of the cathode material, moreover, the element B inhibits the structural transformation of the cathode material from the layered structure to the spinel structure, and also inhibits the activity of the side reaction on the surface of the cathode material, thereby improving the cycle performance of the cathode material.

In some embodiments of the present application, the conductive layer is a carbon layer, and only the carbon layer is doped with the element P and the element B. The element P and the element B can be uniformly distributed in the carbon layer, or can be distributed in a gradient from outside to inside.

In some embodiments, the conductive layer is a carbon layer, and only the carbon layer is doped with an element P and an element B. A doping amount of the element P and the element B in the carbon layer increases from outside to inside. The gradient distribution of the element P and the element B can form a gradient distribution of the concentration of the doping elements in the carbon layer. The concentration is higher near the surface of the lithium-rich material core, which can effectively inhibit side reactions and metal dissolution and prevent the structural transformation of the material. The concentration is lower away from the surface of the lithium-rich material core, which means that the pure carbon layer can further improve the conductivity of the material, thereby improving the cycle stability of the cathode material.

In certain embodiments of the present application, the conductive layer is doped with an element P and an element B, and a mass fraction of the element P and the element B in the cathode material is 0.01 wt% to 5 wt%. It should be noted that if the doping amount of the element P and the element B is too low, the side reaction and metal dissolution cannot be effectively suppressed, resulting in a structural transformation in the material. If the doping amount of the element P and the element B is too high, the proportion of active substances in the cathode material will be reduced, resulting in a decrease in the specific capacity of the cathode material. Therefore, the use of an appropriate amount of element doping in the present application is conducive to suppressing the side reaction of the electrode surface with the electrolyte during the cycle of the material, thereby improving the cycle stability of the cathode material.

In certain embodiments of the present application, the conductive layer is doped with an element P and an element B, and a molar ratio of the element P to the element B is 1:(1 to 2.5). It can be understood that compared with the doping of the element P, the doping of the element B can not only effectively suppress the structural transformation of the cathode material, but also suppress the activity of the side reaction on the surface of the cathode material. Therefore, appropriately increasing the doping of element B can further improve the cycle performance of the cathode material. In some embodiments, the molar ratio of the element P to the element B can be 1:1, 1:1.5 or 1:2, etc.

The cathode material provided by the present application has a lithium-rich material as the core, the surface of the core is coated with a conductive layer, and at least one of the core and the conductive layer is doped with at least one of the element P and the element B, which can inhibit the side reaction of the active material with the electrolyte, thereby stabilizing the material structure. In addition, a conductive dense layer is provided, the conductivity is improved, and the rate performance and cycle stability of the material are improved.

The present application provides a preparation method of the above-mentioned cathode material, comprising: mixing and sintering a conductive material, a lithium-rich material, and at least one of a phosphorus source and a boron source. In some embodiments of the present application, the lithium-rich material is a lithium-rich manganese-based material having a molecular formula of Li₁₊ₓR_{y}Mn_{z}Oₛ; R is selected from metal elements, 0<x≤1, 0≤y< 1, 0<z≤1, 1≤s≤4. In some embodiments of the present application, R is at least one selected from transition metal elements, such as Ni, Fe, Co, V, Cu, Mo, Al, Ti, Mg, Cr, Zr, Sn, and Zn.

In certain embodiments of the present application, the phosphorus source is at least one selected from an organic phosphorus source or an inorganic phosphorus source. The organic phosphorus source is at least one selected from tetraphenylphosphonium bromide, tetraphenylphosphonium iodide, and tetraphenylphosphonium chloride. The inorganic phosphorus source is at least one selected from sodium pyrophosphate, potassium pyrophosphate, sodium acid pyrophosphate, and potassium acid pyrophosphate.

In certain embodiments of the present application, the boron source is at least one selected from an organic boron source or an inorganic boron source. The organic boron source is at least one selected from sodium tetraphenylborate, tetraphenylboron bromide, and potassium tetraphenylborate. The inorganic boron source is at least one selected from sodium borohydride, boric acid, B₂O₃, and B₂H₆.

In certain embodiments of the present application, the conductive material is at least one selected from a carbon material, a conductive polymer, or a conductive oxide. In some embodiments of the present application, the carbon material includes at least one of amorphous carbon, carbon nanotubes, graphite, carbon black, graphene, sucrose, glucose, citric acid, fructose, stearic acid, lauric acid, etc. The conductive oxide may include at least one of In₂O₃, ZnO, and SnO₂. The conductive polymer includes at least one of an organic polymer with a structure of [C₆H₇O₆Na]ₙ, an organic polymer with a structure of [C₆H₇O₂(OH)₂OCH₂COONa]ₙ, an organic polymer with a structure of [C₃H₄O₂]ₙ, an organic polymer with a structure of [C₃H₃O₂Mₐ]ₙ, an organic polymer with a structure of [C₃H₃N]ₙ, an organic polymer with a structure of -[CH₂-CF₂]ₙ-, etc. In some embodiments of the present application, the sintering temperature is 300°C to 500°C, and the sintering time is 2 hrs to 6 hrs.

The preparation method provided by the present application can prepare three cathode materials with different structures. For example, the prepared cathode material has the lithium-rich material as the core, and the surface of the core is coated with a conductive layer doped with at least one of the element P and the element B; or alternatively, the lithium-rich material is the core, the surface of the core is coated with a conductive layer, and at least one of the element P and the element B is doped in the core; or alternatively, the prepared cathode material has the lithium-rich material as the core, the surface of the core is coated with a conductive layer, and the core and the conductive layer are independently doped with at least one of the element P and the element B.

In the present application, at least one of the phosphorus source and the boron source may be mixed with a conductive material to obtain a conductive material doped with at least one of the element P and the element B, and the conductive material is mixed with the lithium-rich material and sintered , and the obtained cathode material has the lithium-rich material as the core, and the surface of the core is coated with a conductive layer doped with at least one of the element P and the element B.

In certain embodiments of the present application, the phosphorus source, the boron source, and the conductive material are mixed and reacted in a solution to obtain a conductive material doped with the element P and the element B. The conductive material doped with the element P and the element B and the lithium-rich material are mixed and sintered to obtain the above-mentioned cathode material. In certain embodiments of the present application, the phosphorus source, the boron source, and the conductive material are dissolved and mixed in anhydrous ethanol for reaction, and then dried to obtain a conductive material doped with the element P and the element B. The conductive material doped with the element P and the element B and the lithium-rich material are mixed, stirred in anhydrous ethanol, dried and sintered under a protective gas atmosphere to obtain the above-mentioned cathode material.

The protective gas of the present application is at least one selected from nitrogen, helium, or argon. The phosphorus source, the boron source, the conductive material, and the lithium-rich material are the same as above and will not be repeated herein. In certain embodiments of the present application, the mass ratio of the phosphorus source to the boron source is 1: (0.5 to 8). A mass fraction of the carbon material doped with the element P and the element B in the total amount after mixing with the lithium-rich material is 0.05 wt% to 20 wt%. In some embodiments, the reaction temperature is 150°C to 180°C, and the reaction time is 5 hrs to 12 hrs. The sintering temperature of the present application is the same as the above and will not be repeated herein.

The phosphorus source and the boron source of the present application are preferably selected from organic phosphorus sources and organic boron sources. Organic matters are used as the phosphorus source and the boron source, and a conductive layer can be formed without adding additional conductive materials, which is simpler to operate and has lower costs. The organic phosphorus source and the organic boron source are mixed and reacted to obtain a carbon material doped with an element P and an element B, and then the carbon material and a lithium-rich material are mixed and sintered to obtain a cathode material with the lithium-rich material as the core and the surface of the core covered with a carbon layer doped with an element P and an element B. Specifically, the organic phosphorus source and the organic boron source are mixed and reacted in a solution to obtain a carbon material doped with an element P and an element B. The carbon material doped with the element P and the element B and the lithium-rich material are mixed and sintered to obtain the above-mentioned cathode material. In certain embodiments of the present application, an organic phosphorus source and an organic boron source are dissolved in anhydrous ethanol and mixed to react, and then dried to obtain a carbon material doped with an element P and an element B. The carbon material doped with the element P and the element B and the lithium-rich material are mixed, stirred in anhydrous ethanol, dried, and sintered under a protective gas atmosphere to obtain the above-mentioned cathode material. The protective gas, the organic phosphorus source, the organic boron source, the lithium-rich material, the reaction temperature and the reaction time, the sintering temperature and the sintering time, the mass ratio of the phosphorus source to the boron source, and the mass fraction of the carbon material doped with the element P and the element B in the total amount after mixing with the lithium-rich manganese-based material are the same as above and will not be repeated herein.

When preparing the cathode material of the above structure, the present application can use a spraying method to make the element P and the element B gradiently doped in the conductive layer from outside to inside. In the present application, a solution containing a phosphorus source, a boron source, and a conductive material is sprayed on a surface of a heated lithium-rich material, which is then pressed; then the sprayed and pressed lithium-rich material is repeatedly subjected to the steps of spraying and pressing, that is, each spraying is followed with pressing once, such an operation can make the inner layer be pressed more times, and the doping amount of the element B and the element P is also higher. Specifically, the method includes: A) spraying a solution containing the phosphorus source, the boron source, and the conductive material on a surface of a heated lithium-rich material, and pressing; B) after repeating step A), calcining an obtained product. In this way, the obtained cathode material has the lithium-rich material as the core, and the surface of the core is coated with the conductive layer doped with the element P and the element B, and the element P and the element B are gradiently doped in the conductive layer from outside to inside. In certain embodiments of the present application, the method includes: A) spraying a mixed solution of a phosphorus source, a boron source, and a conductive material on a surface of a lithium-rich material at a temperature of 200°C to 300°C, and then pressing an obtained product into a cake shape; B) after repeating step A), calcining an obtained product under an inert gas atmosphere to obtain the above-mentioned cathode material. In some embodiments, the number of repetitions is 10 to 50 times. In some embodiments, the concentration of the mixed solution is 1 mol/L to 3 mol/L, preferably 2 mol/L; the mass ratio of the phosphorus source, the boron source, and carbon source in the mixed solution is (0.5 to 1.5) : (0.5 to 4) : (10 to 15), preferably 1:3.5:12. In some embodiments, the calcination temperature is 300°C to 500°C, preferably 400°C; the calcination time is 5 hrs to 10 hrs. In some embodiments, the inert gas is at least one selected from helium and argon. The phosphorus source, the boron source, the conductive material, and the lithium-rich material of the present application are the same as those described in the above and will not be repeated herein.

In the present application, the lithium-rich material is mixed with at least one of the phosphorus source and the boron source and then sintered to obtain a lithium-rich material doped with at least one of the element P and the element B, and then the lithium-rich material doped with at least one of the element P and the element B and a conductive material are mixed and sintered, and the obtained cathode material has the lithium-rich material as the core, the surface of the core is coated with the conductive layer, and at least one of the element P and the element B is doped in the core. The phosphorus source, the boron source, the conductive material, the lithium-rich material, the sintering temperature and the sintering time, and the mass ratio of the phosphorus source to the boron source in the present application are the same as those described in the above and will not be repeated herein.

In the present application, the conductive material, the lithium-rich material, and at least one of the phosphorus source and the boron source can also be directly mixed and stirred together, and the obtained cathode material has the lithium-rich material as the core, the surface of the core is coated with a conductive layer, and the core and the conductive layer are independently doped with at least one of the element P and the element B. The phosphorus source, boron source, the conductive material, and the lithium-rich material, as well as the sintering temperature and sintering time, and the mass ratio of the phosphorus source to the boron source in the present application are the same as those described above and are not repeated herein.

In certain embodiments of the present application, the lithium-rich material is selected from the lithium-rich manganese-based material with a molecular formula of Li₁₊ₓR_{y}Mn_{z}Oₛ, and the preparation method thereof comprises the following steps: mixing a manganese source, an R source, a precipitant, and a complexing agent, and reacting in a solution to obtain a precursor; mixing the precursor with a lithium source, calcining, and obtaining a lithium-rich manganese-based material. In some embodiments, a solution containing a manganese source and an R source is mixed with a solution containing a precipitant and a complexing agent under a nitrogen or argon atmosphere and the mixing conditions are controlled to co-precipitate to obtain a precursor; the precursor is mixed with a lithium source and calcined at high temperature to obtain a lithium-rich manganese-based material. In some embodiments, a solution containing a manganese source and an N source is mixed with a solution containing a precipitant and a complexing agent at a temperature of 50°C to 60°C under a nitrogen or argon atmosphere, and stirred at a speed of 600 rpm to 800 rpm, and the pH value is adjusted to 9.5 to 10.5, and co-precipitation is carried out for 20 hrs to 30 hrs to obtain a precursor; the precursor is mixed with a lithium source, calcined at a high temperature, and naturally cooled to obtain a lithium-rich manganese-based material. The calcination described in the present application is a three-stage calcination, that is, the temperature is increased to 300°C to 500°C at a heating rate of 2°C/min-5°C/min and kept for 2 hrs to 6 hrs, then the temperature is increased to 750°C to 900°C at a heating rate of 2°C/min-5°C/min and kept for 8 hrs to 15 hrs, and the temperature is reduced to 500°C to 700°C at a rate of 2°C/min to 5°C/min and kept for 10 hrs to 15 hrs.

The manganese source of the present application is at least one selected from MnSO₄, Mn(NO₃)₂, or MnCO₃. The R source is selected from salts of Ni, Fe, Co, V, Cu, Mo, Al, Ti, Mg, Cr, Zr, Sn, or Zn, and the salt is at least one of a sulfate, a nitrate, or a carbonate. The precipitant is at least one selected from a hydroxide, a carbonate, or an oxalate. The complexing agent is at least one selected from ammonia, citric acid, or ethylenediamine. The lithium source is at least one selected from LiOH·H₂O, LiNO₃, Li₂CO₃, LiF, or Li₂O. In some embodiments of the present application, the molar ratio of the lithium source to the precursor is (1 to 1.5):1.

The present application provides a cathode, including the cathode material or the cathode material obtained by the above preparation method. In some embodiments of the present application, the cathode is a cathode of a lithium ion battery.

The present application further provides a battery, including the cathode provided in the above, an anode, and a separator arranged between the cathode and the anode. The anode and the separator of the present application are independently common anode and separator for those skilled in the art. In certain embodiments of the present application, the battery is a lithium-ion battery, comprising the cathode of a lithium-ion battery, an anode, and a separator stacked between the cathode and the anode provided in the above.

The present application provides a cathode material, comprising a lithium-rich material core and a conductive layer coated on the surface of the lithium-rich material core; at least one of the core and the conductive layer is doped with at least one of an element P and an element B; the element P can inhibit the structural transformation of the cathode material from the layered structure to the spinel structure, and the doping of element B can also effectively inhibit the structural transformation of the cathode material, and can also inhibit the activity of side reactions on the surface of the cathode material, thereby improving the cycle performance of the cathode material. The cathode material provided by the present application has a conductive layer doped with at least one of the element P and the element B, and the material structure is stable, and the rate performance and cycle stability are high.

### DETAILED DESCRIPTION OF THE EMBODIMENTS

The present application discloses a cathode material, a preparation method thereof, a cathode, and a battery. Those skilled in the art can refer to the contents of this application text and appropriately improve the process parameters. It should be particularly noted that all similar substitutions and modifications are obvious to those skilled in the art, and they are all deemed to be included in the present application. The method and application of the present application have been described through preferred embodiments. It is obvious that relevant personnel can modify or appropriately change and combine the method and application of this application text without departing from the content, spirit, and scope of the present application to realize and apply the technology of the present application.

The present application is further described in combination with the following examples:

### Example 1

This example provides a B, P co-doped carbon-coated manganese-rich cathode material (B, P@C@Li_{1.3}Ni_{0.35}Mn_{0.65}O₂), which has Li_{1.3}Ni_{0.35}Mn_{0.65}O₂ as the core, and the surface of the core is coated with a conductive layer, which is a carbon layer co-doped with B and P. The mass fraction of the carbon layer in the cathode material is 0.05 wt%, the thickness of the carbon layer is 1 nm, the molar ratio of the element P to the element B is 1:1, and the mass fraction of the element P and the element B in the cathode material is 0.01 wt%.

The preparation of element co-doped carbon-coated lithium-rich manganese-based cathode material was carried out according to the following steps:

In step 1, in a nitrogen atmosphere, a 1.6 mol/L aqueous solution of nickel sulfate and manganese sulfate (Ni/Mn=0.35:0.65) was pumped into a continuously stirred reactor, and at the same time, a 1.6 mol/L NaOH and a certain concentration of NH₄OH were pumped into the reactor as a precipitant and a complexing agent, respectively, under conditions of 55°C, pH=10.5, stirring speed 800 rpm, reaction time 20 hrs, a precursor was obtained, the molecular formula of which was Ni_{0.35}Mn_{0.65}(OH)₂.

In step 2, Ni_{0.35}Mn_{0.65}(OH)₂ and LiOH·H₂O were uniformly mixed at a molar ratio of 1:1.3, and a resulting mixture was placed in a tubular furnace in an air atmosphere. First, the temperature was raised from room temperature to 500°C at a heating rate of 5°C/min and kept for 5 hrs, then the temperature was raised to 850°C at the same heating rate and calcined for 12 hrs, and then the temperature was lowered to 600°C at the same cooling rate and kept for 10 hrs, and finally a lithium-rich manganese-based material Li_{1.3}Ni_{0.35}Mn_{0.65}O₂ was obtained.

In step 3, tetraphenylphosphonium bromide and sodium tetraphenylborate at a mass ratio of 1:0.82 were dissolved in anhydrous ethanol, and dried in a water bath at 180°C for 5 hrs to obtain a B, P co-doped carbon (B,P@C).

In step 4, 1 wt% B, P@C, Li_{1.3}Ni_{0.35}Mn_{0.65}O₂, and anhydrous ethanol were mixed and stirred for 4 hrs. After drying, a resulting product was heated at 400°C for 2 hrs in a nitrogen atmosphere to obtain a B, P co-doped carbon-coated manganese-rich cathode material (B, P@C@Li_{1.3}Ni_{0.35}Mn_{0.65}O₂).

### Example 2

This example provides a B, P co-doped carbon-coated manganese-rich cathode material (B,P@C@Li_{1.3}Ni_{0.35}Mn_{0.65}O₂), which has Li_{1.3}Ni_{0.35}Mn_{0.65}O₂ as the core, and the surface of the core is coated with a conductive layer, which is a carbon layer co-doped with B and P. The mass fraction of the carbon layer in the cathode material is 1.5 wt%, the thickness of the carbon layer is 2 nm, the molar ratio of the element P to the element B is 1:1.22, and the mass fraction of the element P and the element B in the cathode material is 0.05 wt%.

The product in this example was prepared by a preparation method that is different from that in Example 1 in that: the 1 wt% B, P@C in step 4 was changed to 3 wt% B, P@C, and the other steps remained the same.

### Example 3

This example provides a B, P co-doped carbon-coated manganese-rich cathode material (B,P@C@Li_{1.3}Ni_{0.35}Mn_{0.65}O₂), which has Li_{1.3}Ni_{0.35}Mn_{0.65}O₂ as the core, and the surface of the core is coated with a conductive layer, which is a carbon layer co-doped with B and P. The mass fraction of the carbon layer in the cathode material is 10 wt%, the thickness of the carbon layer is 50 nm, the molar ratio of the element P to the element B is 1: 2.5, and the mass fraction of the element P and the element B in the cathode material is 5 wt%.

The product in this example was prepared by a preparation method that is different from that in Example 1 in that: the 1 wt% B, P@C in step 4 was changed to 20 wt% B, P@C, and the other steps remained the same.

### Example 4

This example provides a B, P co-doped carbon-coated manganese-rich cathode material (B,P@C@ Li_{1.2}Fe_{0.2}Mn_{0.6}O₂), which has Li_{1.2}Fe_{0.2}Mn_{0.6}O₂ as the core, and the surface of the core is coated with a conductive layer, which is a carbon layer co-doped with B and P. The mass fraction of the carbon layer in the cathode material is 2.1 wt%, the thickness of the carbon layer is 2.8 nm, the molar ratio of the element P to the element B is 1: 1.24, and the mass fraction of the element P and the element B in the cathode material is 0.08 wt%.

The preparation of element co-doped carbon-coated lithium-rich manganese-based cathode material was carried out according to the following steps:

In step 1, in a nitrogen atmosphere, a 1.6 mol/L aqueous solution of nickel sulfate and manganese sulfate (Ni/Mn=0.2:0.6) was pumped into a continuously stirred reactor, and at the same time, a 1.6 mol/L NaOH and a certain concentration of NH₄OH were pumped into the reactor as a precipitant and a complexing agent, respectively, under conditions of 50°C, pH=10.2, stirring speed 600 rpm, reaction time 15 hrs, a precursor was obtained, the molecular formula of which was Fe_{0.2}Mn_{0.6}(OH)₂

In step 2, Fe_{0.2}Mn_{0.6}(OH)₂ and LiOH·H₂O were uniformly mixed at a molar ratio of 1: 1.25, and a resulting mixture was placed in a tubular furnace in an air atmosphere. First, the temperature was raised from room temperature to 450°C at a heating rate of 3°C/min and kept for 4 hrs, then the temperature was raised to 800°C at the same heating rate and calcined for 12 hrs, and then the temperature was lowered to 650°C at the same cooling rate and kept for 12 hrs, and finally a lithium-rich manganese-based material Li_{1.2}Fe_{0.2}Mn_{0.6}O₂ was obtained.

In step 3, tetraphenylphosphonium bromide and sodium tetraphenylborate at a mass ratio of 1:1.01 were dissolved in anhydrous ethanol, and dried in a water bath at 160°C for 8 hrs to obtain a B, P co-doped carbon (B,P@C).

In step 4, 4 wt% B, P@C, Li_{1.2}Fe_{0.2}Mn_{0.6}O₂, and anhydrous ethanol were mixed and stirred for 5 hrs. After drying, a resulting product was heated at 450°C for 4 hrs in a nitrogen atmosphere to finally obtain a B, P co-doped carbon-coated manganese-rich cathode material (B,P@C@ Li_{1.2}Fe_{0.2}Mn_{0.6}O₂).

### Example 5

This example provides a cathode material, which has Li_{1.3}Ni_{0.35}Mn_{0.65}O₂ as the core, the core is a B, P co-doped core, and the surface of the core is coated with a carbon layer. The mass fraction of the carbon layer in the cathode material is 1.8 wt%, the thickness of the carbon layer is 2.4 nm, the molar ratio of the element P to the element B is 1:1.23, and the mass fraction of the element P and the element B in the cathode material is 0.065 wt%.

The preparation of lithium-rich manganese-based cathode material with only the core co-doped with elements was carried out according to the following steps:

In step 1, in a nitrogen atmosphere, a 1.6 mol/L aqueous solution of nickel sulfate and manganese sulfate (Ni/Mn=0.35:0.65) was pumped into a continuously stirred reactor, and at the same time, a 1.6 mol/L NaOH and a certain concentration of NH₄OH were pumped into the reactor as a precipitant and a complexing agent, respectively, under conditions of 55°C, pH=10.5, stirring speed 800 rpm, reaction time 20 hrs, a precursor was obtained, the molecular formula of which was Ni_{0.35}Mn_{0.65}(OH)₂.

In step 2, Ni_{0.35}Mn_{0.65}(OH)₂, LiOH·H₂O, B₂O₃ and Na₄P₂O₇ were uniformly mixed in a molar ratio of 1:1.3:0.0246:0.02, and a resulting mixture was placed in an air atmosphere of a tubular furnace. First, the temperature was increased from room temperature to 500°C at a heating rate of 5°C/min and kept for 5 hrs. Then, the temperature was increased to 800°C at the same heating rate and calcined for 15 hrs. Then, the temperature was cooled to 550°C at the same cooling rate and kept for 15 hrs. Finally, a B, P co-doped manganese-rich cathode material B,P@Li_{1.3}Ni_{0.35}Mn_{0.65}O₂ was obtained.

In step 3, B,P@Li_{1.3}Ni_{0.35}Mn_{0.65}O₂ and 3 wt% C₈H₁₁NO₂ were ball milled at 25 Hz for 60 min, a resulting mixture was then placed in a tubular furnace in an argon atmosphere and heated from room temperature to 550°C at a heating rate of 2°C/min for 3 hrs, finally obtaining a B,P co-doped manganese-rich cathode material with a carbon coating (B,P@Li_{1.3}Ni_{0.35}Mn_{0.65}O₂@C).

### Example 6

This example provides a cathode material, which has Li_{1.3}Ni_{0.35}Mn_{0.65}O₂ as the core, the core is a B, P co-doped core, the core surface is coated with a B, P co-doped carbon layer. The carbon layer accounts for 2.3 wt% of the cathode material, the thickness of the carbon layer is 2.9 nm, the molar ratio of the element P to the element B is 1:1.27, and the mass fraction of the element P and the element B in the cathode material is 0.11 wt%.

The preparation of lithium-rich manganese-based cathode material with element co-doping in both the core and the carbon layer was carried out according to the following steps:

In step 1, in a nitrogen atmosphere, a 1.6 mol/L aqueous solution of nickel sulfate and manganese sulfate (Ni/Mn=0.35:0.65) was pumped into a continuously stirred reactor, and at the same time, a 1.6 mol/L NaOH and a certain concentration of NH₄OH were pumped into the reactor as a precipitant and a complexing agent, respectively, under conditions of 55°C, pH=10.5, stirring speed 800 rpm, reaction time 20 hrs, a precursor was obtained, the molecular formula of which was Ni_{0.35}Mn_{0.65}(OH)₂.

In step 2, Ni_{0.35}Mn_{0.65}(OH)₂, LiOH·H₂O, B₂O₃, Na₄P₂O₇, and C₆H₁₂O₆ were uniformly mixed by ball milling at a molar ratio of 1:1.3:0.0254:0.02:0.05, and a resulting mixture was placed in a tubular furnace in an air atmosphere. First, the temperature was increased from room temperature to 450°C at a heating rate of 3°C/min for 5 hrs, then the temperature was increased to 780°C at the same heating rate for calcination for 10 hrs, and then the temperature was decreased to 650°C at the same cooling rate for 12 hrs, and finally a B, P co-doped carbon-coated manganese-rich cathode material B,P-Li_{1.3}Ni_{0.35}Mn_{0.65}O₂@C was obtained.

### Example 7

This example provides a B-doped carbon-coated manganese-rich cathode material (B@C@Li_{1.3}Ni_{0.35}Mn_{0.65}O₂), which has Li_{1.3}Ni_{0.35}Mn_{0.65}O₂ as the core, and the surface of the core is coated with a conductive layer, which is a B-doped carbon layer. The mass fraction of the carbon layer in the cathode material is 1.83 wt%, the thickness of the carbon layer is 2.4 nm, and the mass fraction of the element B in the cathode material is 0.062 wt%.

The preparation of the B-doped carbon-coated lithium-rich manganese-based cathode material was carried out according to the following steps:

In step 1, in a nitrogen atmosphere, a 1.6 mol/L aqueous solution of nickel sulfate and manganese sulfate (Ni/Mn=0.35:0.65) was pumped into a continuously stirred reactor, and at the same time, a 1.6 mol/L NaOH and a certain concentration of NH₄OH were pumped into the reactor as a precipitant and a complexing agent, respectively, under conditions of 55°C, pH=10.5, stirring speed 800 rpm, reaction time 20 hrs, a precursor was obtained, the molecular formula of which was Ni_{0.35}Mn_{0.65}(OH)₂.

In step 2, Ni_{0.35}Mn_{0.65}(OH)₂ and LiOH·H₂O were uniformly mixed at a molar ratio of 1:1.3, and a resulting mixture was placed in a tubular furnace in an air atmosphere. First, the temperature was raised from room temperature to 500°C at a heating rate of 5°C/min and kept for 5 hrs, then the temperature was raised to 850°C at the same heating rate and calcined for 12 hrs, and then the temperature was lowered to 600°C at the same cooling rate and kept for 10 hrs, and finally a lithium-rich manganese-based material Li_{1.3}Ni_{0.35}Mn_{0.65}O₂ was obtained.

In step 3, sodium tetraphenylborate was dissolved in anhydrous ethanol at a mass percentage of 9.2 wt%, and dried in a water bath at 170°C for 5 hrs to obtain a B-doped carbon (B@C).

In step 4, 1.2 wt% B@C, Li_{1.3}Ni_{0.35}Mn_{0.65}O₂, and anhydrous ethanol were mixed and stirred for 4 hrs. After drying, a resulting product was heated at 500°C for 2 hrs in a nitrogen atmosphere to finally obtain a B, P co-doped carbon-coated manganese-rich cathode material (B@C@Li_{1.3}Ni_{0.35}Mn_{0.65}O₂).

### Example 8

This example provides a P-doped carbon-coated manganese-rich cathode material (P@C@Li_{1.3}Ni_{0.35}Mn_{0.65}O₂), which has Li_{1.3}Ni_{0.35}Mn_{0.65}O₂ as the core, and the surface of the core is coated with a conductive layer, and the conductive layer is a P-doped carbon layer. The mass fraction of the carbon layer in the cathode material is 1.58 wt%, the thickness of the carbon layer is 2.1 nm, and the mass fraction of the element P in the cathode material is 0.054 wt%.

The preparation of P-doped carbon-coated lithium-rich manganese-based cathode material was carried out according to the following steps:

In step 1, in a nitrogen atmosphere, a 1.6 mol/L aqueous solution of nickel sulfate and manganese sulfate (Ni/Mn=0.35:0.65) was pumped into a continuously stirred reactor, and at the same time, a 1.6 mol/L NaOH and a certain concentration of NH₄OH were pumped into the reactor as a precipitant and a complexing agent, respectively, under conditions of 55°C, pH=10.5, stirring speed 800 rpm, reaction time 20 hrs, a precursor was obtained, the molecular formula of which was Ni_{0.35}Mn_{0.65}(OH)₂.

In step 2, Ni_{0.35}Mn_{0.65}(OH)₂ and LiOH·H₂O were uniformly mixed at a molar ratio of 1:1.3, and a resulting mixture was placed in a tubular furnace in an air atmosphere. First, the temperature was raised from room temperature to 500°C at a heating rate of 5°C/min and kept for 5 hrs, then the temperature was raised to 850°C at the same heating rate and calcined for 12 hrs, and then the temperature was lowered to 600°C at the same cooling rate and kept for 10 hrs, and finally a lithium-rich manganese-based material Li_{1.3}Ni_{0.35}Mn_{0.65}O₂ was obtained.

In step 3, tetraphenylphosphonium bromide was dissolved in anhydrous ethanol at a mass percentage of 7.9 wt%, and dried in a water bath at 150°C for 10 hrs to obtain P-doped carbon (P@C).

In step 4, 1.05 wt% P@C, Li_{1.3}Ni_{0.35}Mn_{0.65}O₂, and anhydrous ethanol were mixed and stirred for 4 hrs. After drying, a resulting product was heated at 300°C for 6 hrs in a nitrogen atmosphere to obtain a P-doped carbon-coated manganese-rich cathode material (P@C@Li_{1.3}Ni_{0.35}Mn_{0.65}O₂).

### Example 9

This example provides a B, P co-doped carbon-coated manganese-rich cathode material (B, P-gradient@C@Li_{1.3}Ni_{0.35}Mn_{0.65}O₂), which has Li_{1.3}Ni_{0.35}Mn_{0.65}O₂ as the core, and the surface of the core is coated with a conductive layer, which is a carbon layer co-doped with B and P. The doping amount of B and P in the carbon layer gradiently increases from outside to inside; the mass fraction of the carbon layer in the cathode material is 1.68 wt%, the thickness of the carbon layer is 2.2 nm, the molar ratio of the element P to the element B is 1:1.23, and the mass fraction of the element P and the element B in the cathode material is 0.058 wt%.

The preparation of element gradiently co-doped carbon-coated lithium-rich manganese-based cathode material was carried out according to the following steps:

In step 1, in a nitrogen atmosphere, a 1.6 mol/L aqueous solution of nickel sulfate and manganese sulfate (Ni/Mn=0.35:0.65) was pumped into a continuously stirred reactor, and at the same time, a 1.6 mol/L NaOH and a certain concentration of NH₄OH were pumped into the reactor as a precipitant and a complexing agent, respectively, under conditions of 55°C, pH=10.5, stirring speed 800 rpm, reaction time 20 hrs, a precursor was obtained, the molecular formula of which was Ni_{0.35}Mn_{0.65}(OH)₂.

In step 2, Ni_{0.35}Mn_{0.65}(OH)₂ and LiOH·H₂O were uniformly mixed at a molar ratio of 1:1.3, and a resulting mixture was placed in a tubular furnace in an air atmosphere. First, the temperature was raised from room temperature to 500°C at a heating rate of 5°C/min and kept for 5 hrs, then the temperature was raised to 850°C at the same heating rate and calcined for 12 hrs, and then the temperature was lowered to 600°C at the same cooling rate and kept for 10 hrs, and finally a lithium-rich manganese-based material Li_{1.3}Ni_{0.35}Mn_{0.65}O₂ was obtained.

In step 3, Li_{1.3}Ni_{0.35}Mn_{0.65}O₂ was heated to 200°C, a mixed solution of B₂O₃, Na₄P₂O₇, and C₈H₁₁NO₂ with a mass ratio of 1:3.5:12 and a concentration of 2 mol/L was sprayed onto the surface of the Li_{1.3}Ni_{0.35}Mn_{0.65}O₂, which was then pressed into a cake-shaped product with a diameter of 2 cm and a thickness of 0.5 cm by an external pressure. The steps of spraying with the above mixed solution and pressing the obtained product were repeated, the number of repetitions was 22 times; the obtained product after repeated spraying and pressing was heated to 400°C for heat treatment for 8 hrs under an argon atmosphere at a heating rate of 2°C/min, a B, P gradiently co-doped carbon-coated manganese-rich cathode material (B, P-gradient@C@Li_{1.3}Ni_{0.35}Mn_{0.65}O₂) was finally obtained.

### Comparative Example 1

This example provides a carbon-coated manganese-rich cathode material (Li_{1.3}Ni_{0.35}Mn_{0.65}O₂@C), which has Li_{1.3}Ni_{0.35}Mn_{0.65}O₂ as the core, and the surface of the core is coated with a conductive layer, and the conductive layer is a carbon layer. The mass fraction of the carbon layer in the cathode material is 1.57 wt%, and the thickness of the carbon layer is 2 nm.

### Performance test

Further, in order to verify the progressiveness of the embodiments of the present application, the lithium-rich materials of Examples 1 to 9 and Comparative Example 1 were carried out with the following performance tests:

### 1. Button battery evaluation method:

### A) Battery assembly:

① Cathode plate: the cathode materials of Examples 1 to 9 and Comparative Example 1 were respectively used as active materials, and each of the active materials were mixed with polyvinylidene fluoride and SP-Li in a mass ratio of 95:3:2 by ball milling and stirring to obtain a cathode slurry, and the cathode slurry was coated on a surface of an aluminum foil, and dried at 120°C for 30 min, respectively, to obtain a cathode plate;
② Anode: lithium metal plate;
③ Electrolyte: ethylene carbonate and ethyl methyl carbonate were mixed in a volume ratio of 3:7, and LiPF₆ with a concentration of 1 mol/L was added to form an electrolyte;
④ Separator: polypropylene microporous separator;
(5) Lithium-ion battery assembly: lithium-ion batteries were assembled in an inert atmosphere glove box in the order of anode-separator-electrolyte-cathode plate. The lithium-ion batteries corresponding to the cathode materials of Examples 1 to 9 were batteries A1 to A9, respectively, and the lithium-ion battery corresponding to the cathode materials of Comparative Example 1 was batteries B1.

### B) Performance test:

The electrochemical performances of batteries A1 to A9 and battery B1 were tested, and the test conditions were as follows: the assembled batteries were placed at room temperature for 6 hrs and then charged and discharged, the charge and discharge voltage was 2.0 to 4.6 V, and the rate was 0.1 C.

The test results are shown in Table 2 below:

**Table 2**

| Sample | Charge capacity (mAh/g) | Discharge capacity (mAh/g) | Coulombic efficiency | Capacity retention rate after 50 cycles at 0.1C |
|---|---|---|---|---|
| Battery A1 | 281.9 | 240.3 | 85.2% | 74.5% |
| Battery A2 | 304.3 | 274.2 | 90.1% | 81.3% |
| Battery A3 | 278.4 | 235.5 | 84.6% | 73.8% |
| Battery A4 | 323.5 | 287.6 | 88.9% | 80.7% |
| Battery A5 | 301.8 | 269.5 | 89.3% | 80.9% |
| Battery A6 | 303.6 | 271.4 | 89.4% | 81.1% |
| Battery A7 | 299.7 | 267.3 | 89.2% | 80.2% |
| Battery A8 | 294.2 | 261.2 | 88.8% | 79.8% |
| Battery A9 | 304.6 | 274.7 | 90.2% | 81.5% |
| Battery B1 | 252.9 | 205.4 | 81.2% | 71.2% |

From the test results of battery B1 in Table 2, it can be seen that simply coating with carbon is far from being able to achieve the effect of stabilizing the material structure and improving performance. The results of charge-discharge specific capacity, Coulombic efficiency, and capacity retention rate after 50 cycles at 0.1C are not as good as the test results of batteries A1-A9. From the test results of batteries A1-A3, it can be seen that when the cathode material with P and B co-doped carbon layer is assembled into a battery, when the thickness of the carbon layer is 2nm, a thin and uniform film can be coated on the surface of the lithium-rich material, so that the material achieves the best performance.

Among batteries A1-A6, compared with batteries A1 and A3, battery A5 (elements are doped in the core and then a carbon layer is coated with on the surface of the core), battery A6 (elements are doped in both the core and the carbon layer), battery A2 and battery A4 (using a liquid phase one-step synthesis method to form a P, B co-doped carbon layer) are more conducive to inhibiting the side reactions between the active material and the electrolyte, thereby stabilizing the material structure; moreover, a conductive dense layer is provided, which improves the conductivity and the cycle stability of the material, as well as having better charge and discharge specific capacity and Coulombic efficiency. In addition, the core material changes, and the theoretical capacity is different. The theoretical capacity of Li_{1.3}Ni_{0.35}Mn_{0.65}O₂ is 358 mAh/g, and the theoretical capacity of Li_{1.2}Fe_{0.2}Mn_{0.6}O₂ is 381 mAh/g, so the performance of battery A4 will be slightly higher than other batteries.

As for batteries A7 and A8, it can be seen from the performance results in Table 2 that their performances are slightly worse than those of batteries A2, A4, A5 and A6. It can be seen that the effect of doping only with the element B or the element P is slightly inferior to the effect of co-doping with the element P and the element B, but the performances of batteries A7 and A8 are still much higher than that of battery B1. The performance of battery A9 is slightly better than those of batteries A2, A4, A5 and A6, indicating that the gradient doping of doping elements can better inhibit the side reactions between active materials and electrolytes and stabilize the material structure.

The above are only preferred specific examples of the present application, but the protection scope of the present application is not limited thereto. Any technician familiar with the technical field within the technical scope disclosed by the present application shall be equivalently replaced or changed according to the technical solution and its inventive concept of the present application, which shall be covered within the protection scope of the present application.

## Claims

1. A cathode material, **characterized by** comprising: a lithium-rich material core, and a conductive layer coated on a surface of the lithium-rich material core; wherein
at least one of the lithium-rich material core and the conductive layer is doped with at least one of an element P and an element B.

2. The cathode material according to claim 1, wherein
a lithium-rich material is a lithium-rich manganese-based material having a molecular formula of Li₁₊ₓR_{y}Mn_{z}Oₛ;
wherein, R is at least one selected from metal elements, 0 <x≤1, 0≤y< 1, 0< z≤1, and 1≤s≤4.

3. The cathode material according to claim 1 or 2, wherein the conductive layer comprises at least one of a carbon layer, a conductive polymer layer, or a conductive oxide layer.

4. The cathode material according to claim 3, wherein the conductive layer is a carbon layer, and the carbon layer is doped with the element P.

5. The cathode material according to claim 3, wherein the conductive layer is a carbon layer, and the carbon layer is doped with the element P.

6. The cathode material according to claim 3, wherein the conductive layer is a carbon layer, and the carbon layer is doped with the element P and the element B.

7. The cathode material according to claim 6, wherein in the carbon layer, a doping amount of the element P and the element B increases from outside to inside.

8. The cathode material according to claim 1, wherein a mass fraction of the conductive layer in the cathode material is 0.05 wt% to 10 wt%; and a thickness of the conductive layer is 1 nm to 50 nm.

9. The cathode material according to claim 6, wherein a molar ratio of the element P to the element B is 1:(1 to 2.5).

10. The cathode material according to claim 6, wherein a mass fraction of the element P and the element B in the cathode material is 0.01 wt% to 5 wt%.

11. The cathode material according to claim 1, wherein a D50 of the lithium-rich material core is 0.3 µm to 50 µm.

12. A preparation method of a cathode material, **characterized by** comprising:
mixing and sintering a conductive material, a lithium-rich material, and at least one of a phosphorus source and a boron source, to obtain the cathode material.

13. The preparation method according to claim 12, **characterized by** specifically comprising:
A) spraying a solution containing the phosphorus source, the boron source, and the conductive material on a surface of a heated lithium-rich material, and pressing; and
B) after repeating step A), calcining an obtained product.

14. The preparation method according to claim 12, **characterized by** specifically comprising:
mixing a phosphorus source, a boron source, and the conductive material, reacting in a solution to obtain a conductive material doped with an element P and an element B; and
mixing the conductive material doped with the element P and the element B and a lithium-rich manganese-based material, and sintering to obtain the cathode material.

15. The preparation method according to claim 14, **characterized by** specifically comprising:
mixing an organic phosphorus source and an organic boron source, reacting in a solution to obtain a carbon material doped with an element P and an element B; and
mixing the carbon material doped with the element P and the element B and a lithium-rich manganese-based material, and sintering to obtain the cathode material.

16. The preparation method according to claim 14, wherein a mass ratio of the phosphorus source to the boron source is 1: (0.5 to 8);
a mass fraction of the conductive material doped with the element P and the element B in a total amount after mixing with the lithium-rich manganese-based material is 0.05 wt% to 20 wt%.

17. A cathode, **characterized by** comprising the cathode material according to any one of claims 1-11 or the cathode material obtained by the preparation method according to any one of claims 12-16.

18. A battery, comprising: a cathode, an anode, and a separator arranged between the cathode and the anode, wherein the cathode is the cathode according to claim 17.
